Europäisches Patentamt

European Patent Office

Office européen des brevets

(11) Veröffentlichungsnummer : **0 120 496**
**B1**

(12) **EUROPÄISCHE PATENTSCHRIFT**

(45) Veröffentlichungstag der Patentschrift :
16.06.87

(51) Int. Cl.⁴ : **A 47 J 43/046, A 47 J 42/56**

(21) Anmeldenummer : **84103359.0**

(22) Anmeldetag : **27.03.84**

(54) **Mehrteiliges elektromotorisch betriebenes Gerät mit magnetischer Sicherheitseinrichtung.**

(30) Priorität : **28.03.83 DE 3311291**

(43) Veröffentlichungstag der Anmeldung :
**03.10.84 Patentblatt 84/40**

(45) Bekanntmachung des Hinweises auf die Patenterteilung : **16.06.87 Patentblatt 87/25**

(84) Benannte Vertragsstaaten :
**DE FR GB IT NL SE**

(56) Entgegenhaltungen :
EP-A- 0 024 992
EP-A- 0 046 169
DE-A- 3 121 252
DE-A- 3 206 493
US-A- 3 114 020
US-A- 3 198 902
US-A- 3 400 347

(73) Patentinhaber : **Braun Aktiengesellschaft**
**Rüsselsheimer Strasse 22**
**D-6000 Frankfurt/Main (DE)**

(72) Erfinder : **Kelterborn, Heinz**
**Am Tiefen Born 8**
**D-6367 Karben 3 (DE)**
Erfinder : **Barowski, Karl-Heinz**
**Stettiner Strasse 58**
**D-6234 Hattersheim 3 (DE)**

(74) Vertreter : **Einsele, Rolf**
**Braun Aktiengesellschaft Postfach 1120 Frankfurter**
**Strasse 145**
**D-6242 Kronberg Taunus (DE)**

## Beschreibung

Die Erfindung betrifft ein mehrteiliges, mit einer magnetischen Sicherheitseinrichtung ausgestattetes, elektromotorisch betriebenes Gerät mit einem den elektrischen Antriebsmotor sowie einen diesen steuernden, durch Magnetfelder betätigbaren Schalter enthaltenden ersten Geräteteil, einem mindestens einen als Permanentmagnet ausgebildeten Hauptmagneten enthaltenden zweiten Geräteteil sowie einem mindestens einen Magnetleiter enthaltenden dritten Geräteteil, wobei erst in ordnungsgemäßer Schließstellung des zusammengesetzten Gesamtgerätes die von dem Hauptmagneten ausgehenden Kraftlinien in die Nähe des Magnetleiters gelangen und nur in dieser Stellung der auf den Magnetleiter übergehende und von ihm übertragene magnetische Kraftfluß ausreicht, eine Betätigung des in der Nähe am anderen Ende des Magnetleiters ausgebildeten Schalter auszulösen.

Bei einem bekannten Gerät mit einer derartigen Sicherheitsverriegelung (EP-A-0 046 169) dient die Sicherheitsvorrichtung dazu, daß der Antriebsmotor des Gerätes nicht mehr Werkzeuge antreibt, wenn das Gerät nicht ordnungsgemäß zusammengesetzt ist bzw. die das Werkzeug schützenden Geräteteile voneinander gelöst sind. Auf diese Weise wird verhindert, daß z. B. rotierende Messer oder andere gefährliche Werkzeuge ohne eine schützende Abdeckung betrieben werden können. Bei dieser bekannten Sicherheitsvorrichtung sind gegenüberliegend am Deckel angeordnete Permanentmagnete befestigt, die erst bei ordnungsgemäßer Schließstellung des Deckels auf dem Behälter in unmittelbare Nähe der am Behälter ausgebildeten Magnetleiter gelangen. Die hierdurch von den Permanentmagneten auf die Magnetleiter übertragenden Kraftlinien werden zu den am Boden des Behälters befindlichen Enden der Magnetleiter geleitet. Die an den Enden austretenden magnetischen Kraftlinien wirken zum Zwecke der Motoreinschaltung auf den im Motorsockel angebrachten, magnetisch betätigbaren Unterbrechungsschalter ein, der hier von einem Reed-Schalter gebildet wird. Ein wesentlicher Nachteil dieser bekannten magnetischen Sicherheitsvorrichtung besteht darin, daß eine bleibende Magnetisierung der Übertragungs- und Schaltelemente nicht ausgeschlossen werden kann, was zu Fehlschaltungen und damit zu einem erheblichen Sicherheitsrisiko führen kann.

Es sind z. B. auch Geräte mit mechanisch wirkenden Sicherheitsverriegelungen (DE-A-1 5-29 275, DE-U-1 647 958) bekannt, die beim Aufsetzen eines Deckels zwangsläufig entriegelt werden. Derartige Verriegelungen haben den Nachteil, daß ihre mechanischen Betätigungsgestänge und Schalter leicht verschmutzen und über dies Alterungs- und Verschleißeinflüssen unterworfen sind.

Es ist ferner eine Sicherheitseinrichtung (DE-C-1 763 831) für Wasch-Spül- und Schleudermaschinen bekannt, bei der ein Verschlußdeckel derart am Gehäuserahmen angeordnet ist, daß die Bewegung desselben die Kontaktfeder eines Schaltorgangs für den Antriebsmotor betätigt, wobei die Kontaktfeder mit einem magnetisierbaren Material als Anker für einen im Verschlußdeckel angeordneten Magneten belegt ist. Die Wirkung des Magneten ist bei dieser Sicherheitseinrichtung auf sehr kurze Distanzen beschränkt, d. h., die Kontaktfeder des Schaltorgans muß sich in unmittelbarer Nähe des Magneten befinden.

Man hat auch bereits aufwendige magnetische Sicherheitsvorrichtungen (DE-A-3 121 252, DE-A-3 206 493) vorgeschlagen, die jedoch aus Kostengründen für die Mehrzahl der möglichen Anwendungsfälle nicht in Betracht kommen.

Der Erfindung liegt daher die Aufgabe zugrunde, ein mehrteiliges Elektrogerät mit einer Sicherheitsvorrichtung zu schaffen, die die Vorteile der verschleißfreien magnetischen Einrichtungen besitzt, ohne jedoch deren bisherige obenerwähnte Nachteile bezüglich des remanenten Magnetismus aufzuweisen, und die außerdem mit geringen Kosten realisiert werden kann.

Diese Aufgabe wird gemäß den kennzeichnenden Merkmalen des Anspruchs 1 gelöst. Der wesentliche Vorteil der vorliegenden Erfindung besteht darin, daß zwangsläufig bei jedem Lösen und Zusammensetzen des Gesamtgerätes der in den magnetisch wirksamen Teilen remanente Magnetismus durch den erfindungsgemäßen zusätzlichen Nebenmagneten, dessen Polarisierung derjenigen des Hauptmagneten entgegengesetzt ist, kompensiert und damit eliminiert wird. Hierdurch wird sicher verhindert, daß der magnetisch betätigbare Sicherheitsschalter ungewollt durch remanenten Magnetismus in Schließstellung gehalten wird und hierdurch der Motor auch bei voneinander gelösten Geräteteilen — z. B. bei abgenommenen Deckel des Schnitzelwerkes einer Küchenmaschine — anlaufen kann.

Weitere zweckmäßige Ausgestaltungen der Erfindung sind in den abhängigen Ansprüchen 2 bis 10 angegeben.

In der Zeichnung wird die vorliegende Erfindung am Beispiel einer Küchenmaschine erläutert:

Figur 1 zeigt eine perspektivisch-schematische Darstellung einer Küchenmaschine mit einer erfindungsgemäßen Sicherheitsvorrichtung;

Figur 2 gibt eine vorteilhafte Anordnung der Magnetleiter wieder;

Figur 3 zeigt in den Beispielen a-e verschiedene Möglichkeiten der Anordnung der Permanentmagnete im Deckel einer Küchenmaschine;

Figur 4 veranschaulicht eine Variante der Erfindung, bei der der eine Magnetleiter in der Behälterwandung und der andere im Griff angeordnet ist;

Figur 5a und b gibt schematisch einen Seitenschnitt bzw. eine Draufsicht der Ausführungsform gemäß Figur 4 wieder ;

Figur 6a und b veranschaulicht die Erfindung an einer besonders vielseitigen Ausführungsform ;

Figur 7 zeigt, wie der magnetisch beeinflußbare Schalter beispielsweise in den Schaltstromkreis des Antriebsmotors integriert sein kann ;

Figur 8 zeigt eine erfindungsgemäße Schaltanordnung, die im Zusammenwirken mit der Ausführungsform gemäß Figur 6a und b besonders vorteilhaft ist.

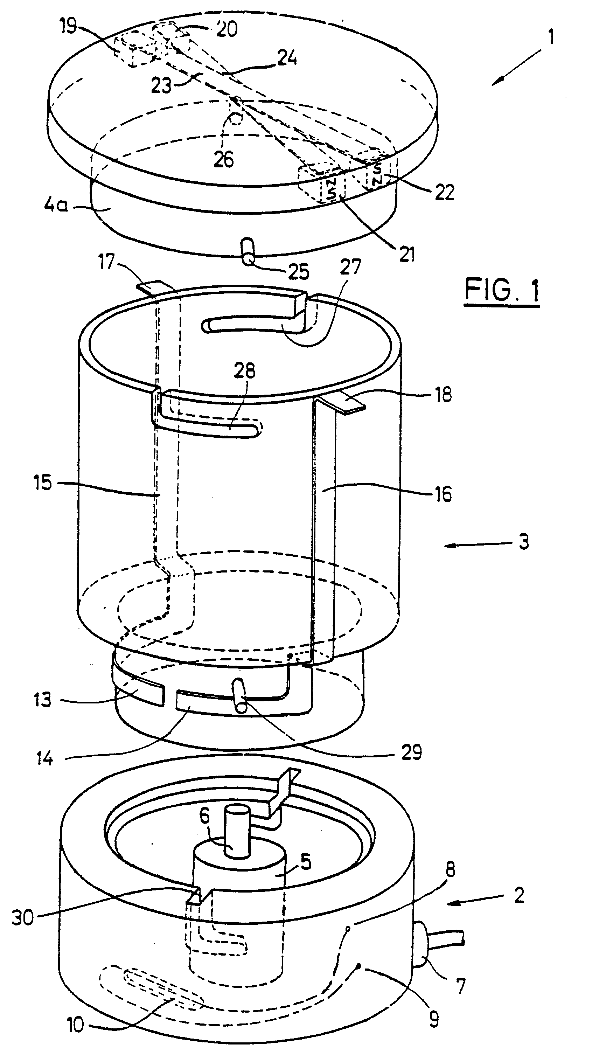

Figur 1 erläutert die vorliegende Erfindung am Beispiel einer Küchenmaschine, die z. B. eine elektrische Kaffeemühle, ein Mixer oder ein Zerkleinerer sein kann. Die Küchenmaschine besteht im wesentlichen aus 3 Teilen : einem ersten Geräteteil 2, dem Sockel, einem dritten Geräteteil 3, dem Behälter und einem zweiten Geräteteil 1, das in diesem Fall aus einem Deckel besteht. Der Deckel 1 kann mit dem Behälter 3 und dieser mit dem Sockel 2 verbunden werden. Im Sockel 2 befindet sich ein Antriebsmotor 5 mit der Motorwelle 6. Auf dieser Welle kann z. B. ein Messer oder ein anderes schnellaufendes Zerkleinerungswerkzeug befestigt werden, das dann im Behälter 3 in Rotation versetzt werden kann. Die Stromversorgung des Motors 5 erfolgt über einen Kabelanschluß 7 und einen nicht dargestellten Netzschalter. Der im Sockel 2 angeordnete Reed-Schalter 10 ist mit seinen Anschlüssen 8 und 9 in den Versorgungsstromkreis des Motors eingefügt und unterbricht diesen — auch bei eingeschaltetem Netzschalter — solange seine Kontakte nicht durch magnetische Erregung geschlossen werden. Sobald der Behälter 3 ordnungsgemäß auf den Sockel 2 aufgesetzt und mittels Zapfen 29 und Führungsnut 30 arretiert ist, befindet sich der Spalt zwischen den unteren Laschen 13, 14 der an der Behälterwandung angeordneten Magnetleiter 15, 16 in unmittelbarer Nachbarschaft des Reed-Schalters 10.

Im Deckel 1 sind zwei durch je ein Joch 23, 24 verbundene Haupt- und Nebenmagnet-Paare 20, 21 und 19, 22 angeordnet. Bei ordnungsgemäß aufgesetztem Deckel 1 befindet sich das Hauptmagnet-Paar 20, 21 exakt über den oberen Laschen 17, 18 der Magnetleiter 15, 16, so daß sein magnetischer Kraftfluß in die Magnetleiter 15, 16 eintritt und durch diese zum Reed-Schalter 10 geführt wird. Die Magnetleiter 15, 16 bestehen zweckmäßig aus einem Material geringer Remanenz und hoher magnetischer Leitfähigkeit, also z. B. Weicheisen oder Dynamoblech. Um die durch das Zusammenwirken der Zapfen 25, 26 und der zugehörigen Führungsnuten 28, 27 bewirkte Deckelarretierung zu lösen, wird der Deckel 1 im Uhrzeigersinn gedreht. Dabei überstreicht der magnetische Kraftfluß des Nebenmagnet-Paares 19, 22, der dem magnetischen Kraftfluß des Hauptmagnet-Paares 20, 21 entgegengerichtet und etwas geringer ist als dieser, die Endlaschen 17, 18 der Magnetleiter 15, 16 und entmagnetisiert diese. Dabei ist es wichtig, daß der wirksame magnetische Kraftfluß des Nebenmagnet-Paares 19, 22 um soviel geringer ist als derjenige des Hauptmagnet-Paares 20, 21, daß er auf keinen Fall seinerseits das Schließen des Reed-Schalters 10 bewirken kann.

Demnach kann die in Figur 1 dargestellte Küchenmaschine dann und nur dann in Betrieb genommen werden, wenn sowohl der Behälter 3 auf dem Sockel 2 als auch der Deckel 1 auf dem Behälter 3 ordnungsgemäß positioniert ist. Sobald entweder der Deckel 1 vom Behälter 3 und/oder der Behälter 3 vom Sockel 2 gelöst wird, ist der den Reed-Schalter 10 schließende magnetische Kraftfluß unterbrochen und der Motor 5 wird ausgeschaltet. Durch die zwangsläufige, beim Lösen des Deckels 1 erfolgende Entmagnetisierung der Magnetleiter 15, 16 werden Fehlschaltungen des Reed-Schalters 10 sicher verhindert, und damit ist die zuverlässige Funktion des erfindungsgemäßen Sicherheitssystems unter allen Umständen gewährleistet.

Anstelle des in dem vorstehenden Beispiel verwendeten Reed-Schalters 10 können auch andere durch ein Magnetfeld steuerbare Schaltelemente verwendet werden, beispielsweise elektronische Bauteile und insbesondere Halbleiter-Schaltelemente.

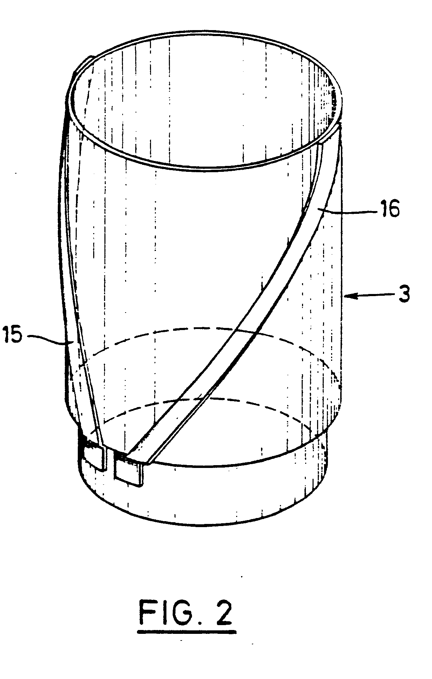

Die in Figur 1 dargestellte diametrale Anordnung der Magnetleiter 15, 16, bei der diese im maximal möglichen Abstand voneinander verlaufen, ist insofern vorteilhaft, als hierbei die gegenseitige Beeinträchtigung der durch sie geführten Magnetflüsse über ihre magnetischen Streufelder am geringsten ist. Die Ausführungsform gemäß Figur 2, bei der der Abstand der Magnetleiter 15, 16 sich von oben nach unten verringert, trägt der Tatsache Rechnung, daß der an ihren oberen Enden von den Haupt- bzw. Nebenmagneten 20, 21 bzw. 19, 20 eingeleitete magnetische Kraftfluß sich durch Streuverluste nach unten hin verringert, wodurch auch die gegenseitige Beeinträchtigung der Magnetflüsse abnimmt und der anfängliche große Abstand nicht mehr erforderlich ist.

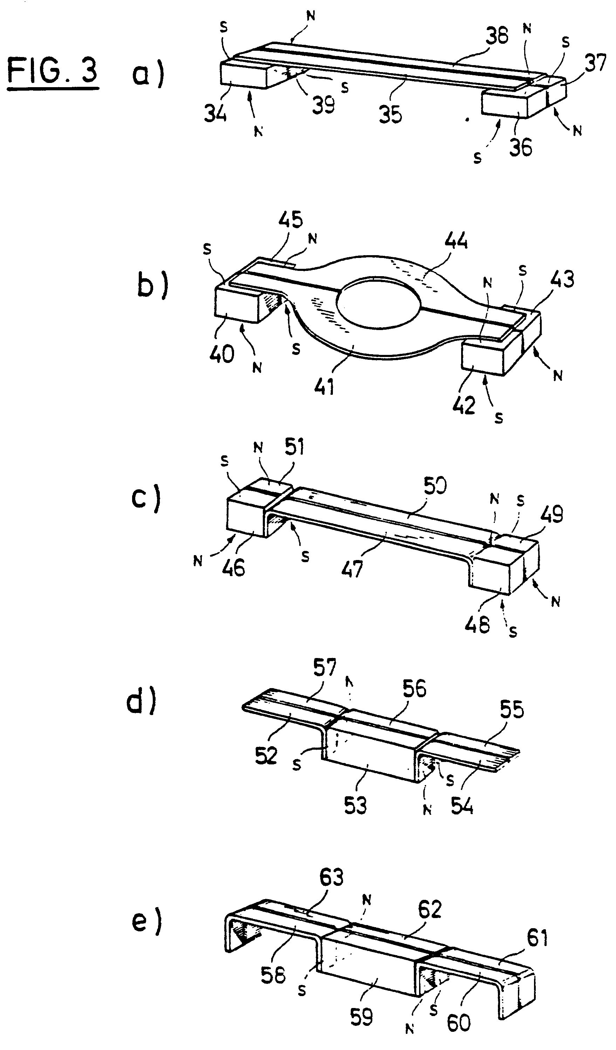

In Figur 3 sind vorteilhafte Ausführungsformen der im zweiten Geräteteil 1 eines erfindungsgemäßen mehrteiligen Elektrogerätes angeordneten Haupt- bzw. Nebenmagnet-Paare dargestellt, die durch je ein Joch oder Rückschlußblech miteinander magnetisch gekoppelt sind. Die polare Ausrichtung der Haupt- bzw. Nebenmagnete ist durch Kennzeichnung des Nord- bzw. Südpols mit N bzw. S angedeutet. In Figur 3a sind die Haupt- bzw. Nebenmagnet-Paare 34, 36 und 37, 39 durch je ein zueinander paralleles stabförmiges Joch oder Rückschlußblech 35, 38 magnetisch miteinander gekoppelt. In Figur 3b sind die die Haupt- bzw. Nebenmagnet-Paare 40, 42 und 43, 45 miteinander verbindenden Joche oder Rückschlußbleche 41, 44 so gestaltet, daß zwischen ihnen ein kreisförmiger Durchbruch — beispielsweise zur Durchführung eines Einfüllschachtes im Deckel entsteht. In Figur 3c ist eine Ausführungsform gezeigt, bei welcher die Joche oder Rückschlußbleche 47, 50 an ihren Enden rechtwinklig umgebogen und die Haupt- bzw. Nebenmagnete 46, 48 und 49, 51 an die hierdurch entstandenen Stirnseiten angesetzt sind. Eine Möglichkeit, anstelle der Haupt- bzw. Nebenmagnet-Paare nur je einen Magneten als Hauptmagnet und als Nebenmagnet zu verwenden, ist in den Figuren 3d und 3e wiedergegeben. Gemäß Figur 3d sind der Haupt- bzw. Nebenmagnet 53, 56 an ihren Pol-Enden mit je zwei L-förmigen Leiterblechen 52, 54 bzw. 55, 57 verbunden. Die Variante gemäß Figur 3e besitzt an jedem des Haupt- bzw. Nebenmagneten 59, 62 zwei U-förmige Leiterbleche 58, 60 bzw. 61, 63.

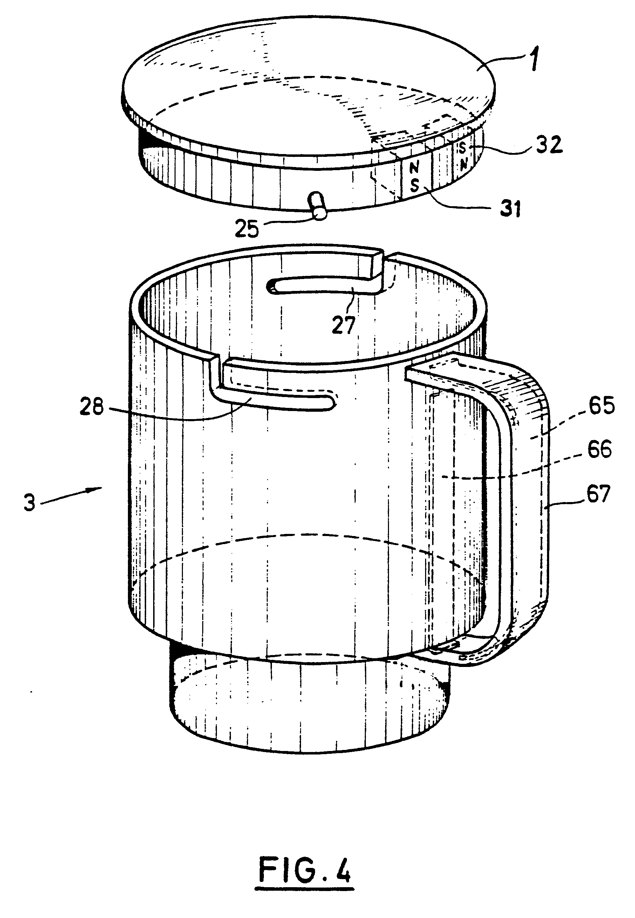

Figur 4 zeigt am Beispiel eines Behälters 3 mit Deckel 1 für eine Küchenmaschine eine Variante der Erfindung, bei welcher nur ein Hauptmagnet 31 und ein gegenpolig ausgerichteter Nebenmagnet 32 auf einer Seite des Deckelrandes im Deckel 1 angeordnet sind. In dieser Ausführungsform verläuft der eine Magnetleiter 66 in oder an der Wandung des Behälters 3, während der zweite Magnetleiter 65 im oder am Henkel 67 angeordnet ist. Auch in dieser Ausführungsform wird der magnetische Kraftfluß des Hauptmagneten 31 durch die Magnetleiter 65 und 66 in einem in sich geschlossenen Kreis geführt und zusammengehalten, der den Reed-Schalter 10 (siehe Fig. 1) erfaßt.

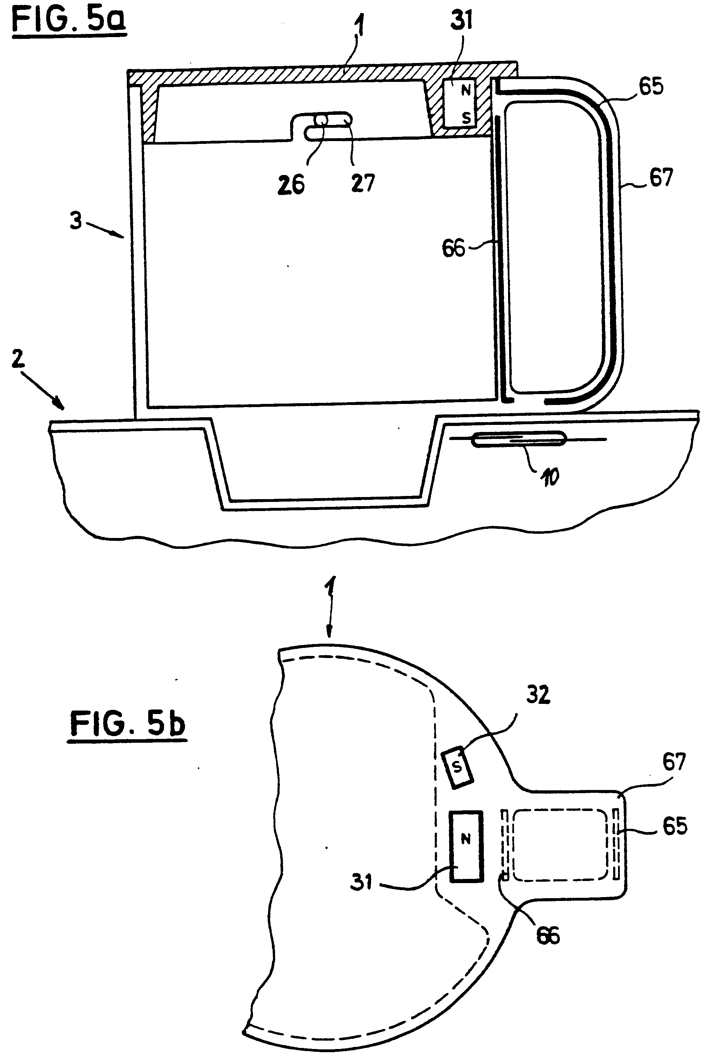

Die Figuren 5a und 5b zeigen diese Ausführungsform in einem schematisierten Seitenschnitt und in einer Draufsicht. In Figur 5a kann man im Rand des Deckels 1 den Hauptmagneten 31 erkennen, dessen Nordpol dem oberen Ende des Magnetleiters 65 und dessen Südpol dem oberen Ende des Magnetleiters 66 gegenüberliegt. Den unteren Enden dieser Magnetleiter 65, 66 liegt der Reed-Schalter 10 gegenüber, und zwar befindet sich dieser innerhalb des durch seine obere Wandung angedeuteten Motorteils bzw. Sockels 2. In der Draufsicht gemäß Figur 5b sind die beiden erfindungsgemäßen Magnete, nämlich der Hauptmagnet 31 und der in entgegengesetzter Polausrichtung angeordnete Nebenmagnet 32, erkennbar.

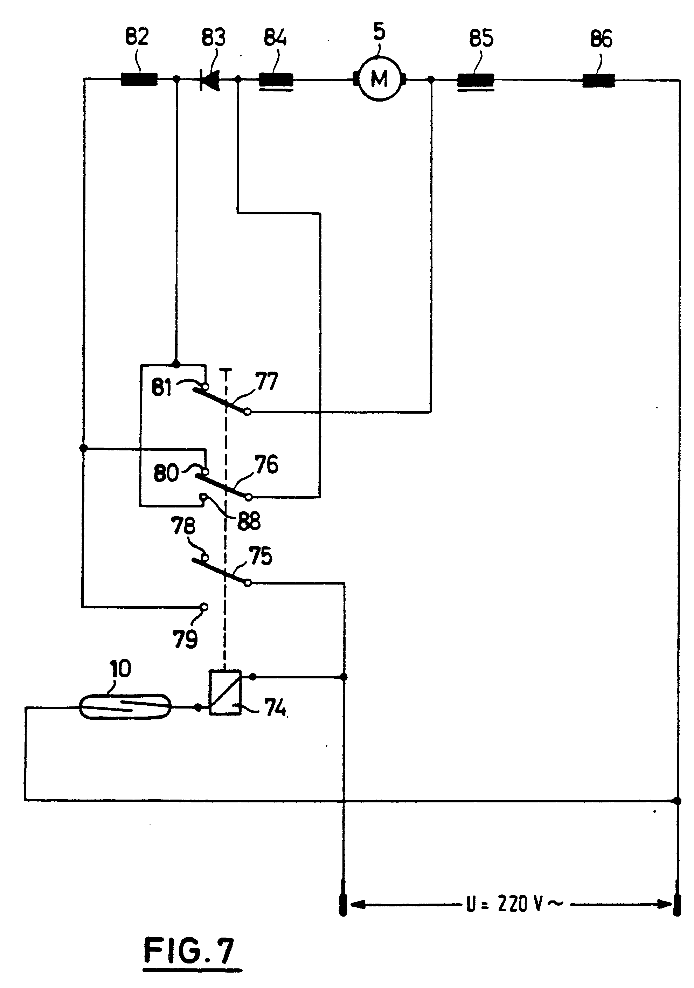

Der Reed-Schalter 10, gemäß den Figuren 1 oder 5a kann direkt in den Versorgungsstromkreis des Motors 5 eingefügt sein. Vorzugsweise schalten sie den Motor 5 jedoch mittelbar, d. h., über ein zusätzliches Schaltrelais 74, wie dies beispielsweise in Figur 7 dargestellt ist. Dieses Schaltrelais 74 enthält drei Schaltkontakte 75, 76, 77, welche in der dargestellten Ruhestellung an den Kontakten 78, 80 und 81 anliegen, von denen die beiden Kontakte 80 und 81 miteinander verbunden sind. Die Rotorwicklung des Motors 5 ist mit ihrem einen Anschluß mit dem Schaltkontakt 77 und mit ihrem anderen Anschluß über die Drossel 84 mit dem Schaltkontakt 76 verbunden. An diese Drossel 84 ist außerdem die Anode einer Diode 83 angeschlossen, deren Kathode über den Kontakt 81 mit der einen Statorwicklung 82 des Motors 5 verbunden ist, welche ihrerseits an dem Kontakt 80 anliegt. Von der einen Anschlußklemme der Netzspannung U führt eine Verbindung über die zweite Statorwicklung 86 des Motors 5 und eine Drossel 85 zur Rotorwicklung des Motors 5 sowie zum Schaltkontakt 77. Wird der Reed-Schalter 10 durch ein Magnetfeld aktiviert, so schließt er das Schaltrelais 74 an die Netzspannung U an, worauf das Schaltrelais 74 anzieht, so daß die Kontakte 78, 80, 81 geöffnet und die Kontakte 79 und 88 geschlossen werden. Hierdurch ist der Motorstromkreis geschlossen und der Motor 5 beginnt zu laufen. Sobald der Reed-Schalter 10 nicht mehr aktiviert wird, d. h., sowie z. B. der Deckel 1 in den Ausführungsbeispielen gemäß Figur 1 sowie den Figuren 4 und 5 abgenommen wird, fällt das Schaltrelais 74 ab, wobei die in Figur 7 dargestellte Schaltungsanordnung dafür sorgt, daß die Statorwicklung des Motors 5 kurzzeitig von einem den Motor abbremsenden und momentan zum Stillstand bringenden Strom durchflossen wird.

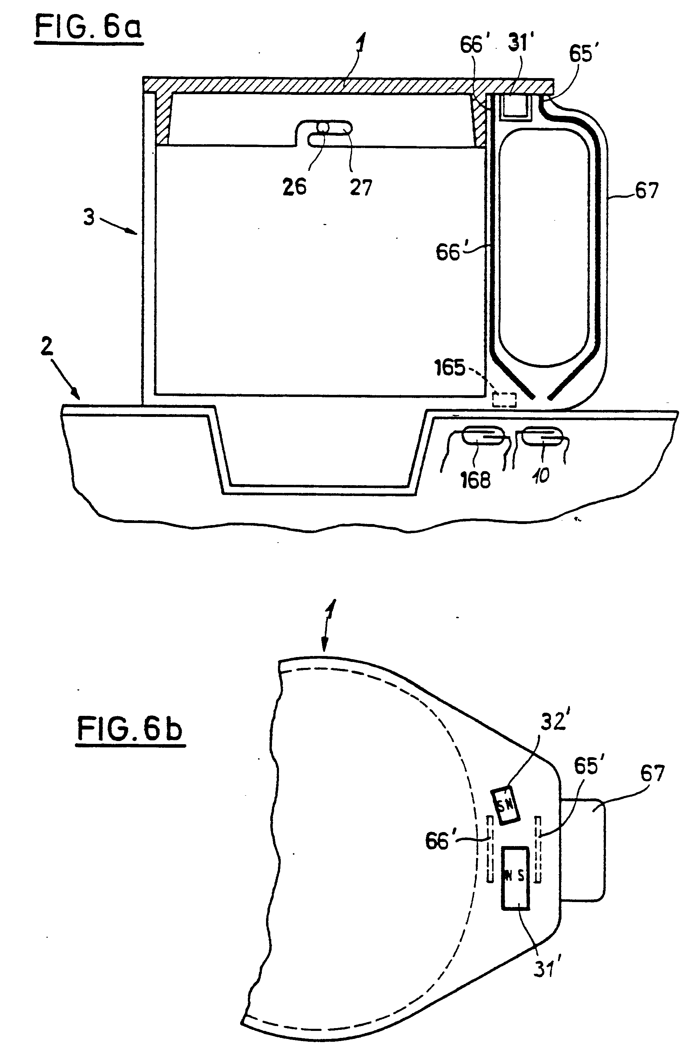

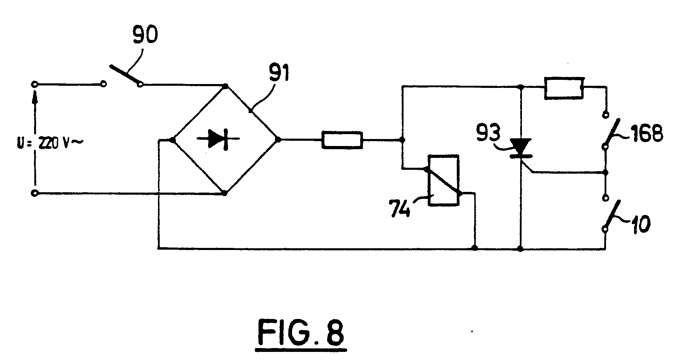

Die Figuren 6a und 6b veranschaulichen eine Ausführungsform der vorliegenden Erfindung, die verschiedene Weiterbildungen des erfinderischen Grundgedankens zuläßt. Sie trägt der Tatsache Rechnung, daß es in der Praxis Fälle gibt, in denen der Motorteil eines mehrteiligen Elektrogerätes nicht nur in Verbindung mit dem ein gefährlich rotierendes Werkzeug enthaltenden Behälter 3 und dem als Sicherheitsabdeckung wirkenden Deckel 1 in Betrieb setzbar sein soll, sondern alternativ auch mit ungefährlichen Geräteteilen kombinierbar ist, d. h., mit solchen Geräteteilen, die nur langsam laufende und/oder stumpfe Werkzeuge enthalten. Bei einer Küchenmaschine wäre ein derart ungefährlicher Geräteteil, beispielsweise eine Rührschüssel, in der nur ein langsam umlaufender Knethaken enthalten oder einsetzbar ist. In diesem Fall schaffen der Hilfsmagnet 165 und der zugeordnete magnetisch betätigbare Schalter 168 — vorzugsweise im Zusammenwirken mit der Schaltung gemäß Figur 8 — die Möglichkeit, den Antriebsteil des Elektrogerätes sowohl mit einem ungefährlichen dritten Geräteteil 3, das keinerlei Permanentmagnete enthält, in Betrieb zu setzen, als auch mit einem gefährlichen dritten Geräteteil 3, das zu seiner sicheren Handhabung eines zusätzlichen, abdeckenden zweiten Geräteteils 1 bedarf.

Im einzelnen ist der Aufbau dieser Ausführungsform gemäß den Fig. 6a und 6b, wie folgt : Der Deckel 1 enthält, ähnlich wie bei der Ausführungsform gemäß Figur 5a und b den Hauptmagneten 31' und den Nebenmagneten 32'. Diese können, wie in Figur 6b angedeutet, auch horizontal ausgerichtet und so angeordnet sein, daß der Hauptmagnet 31' sich bei ordnungsgemäß aufgesetztem Deckel 1 zwischen den oberen Enden der beiden bis zum oberen Behälterrand hochgezogenen Magnetleiter 65' und 66' befindet und der gegenpolige Nebenmagnet 32' beim Öffnen des Deckels 1 zwischen diesen beiden oberen Enden der Magnetleiter 65', 66' hindurchgeführt wird. Sobald der Deckel 1, der Behälter 3 und der Sockel 2 ordnungsgemäß zueinander positioniert sind, gelangt der magnetische Kraftfluß des Hauptmagneten 31' über die Magnetleiter 65' und 66' zum Reed-Schalter 10 und schaltet dieses, während gleichzeitig der zusätzliche Reed-Schalter 168 durch den zusätzlichen Hilfsmagneten 165 geschlossen wird.

Die beiden Reed-Schalter 10 und 168 der Figur 6a werden vorzugsweise in einer elektrischen Schaltungsanordnung gemäß Figur 8 betrieben, in dem das den Motor in Gang setzende Schalterrelais 74 auch bei geöffneten Reed-Schaltern 10, 168 durch Schließen des Netzschalters 90 betätigt werden kann. Diese Betriebsart kommt zur Anwendung, wenn der Motorteil des Gerätes mit einem ungefährlichen Zusatzteil kombiniert wird, das keinerlei die Reed-Schalter 10, 168 beeinflussende Haupt-bzw. Nebenmagnete enthält. Wird dagegen ein gefährliches Geräteteil, wie beispielsweise der Behälter 3 in Figur 6a, ohne den sichernden Deckel 1 auf den Motorteil 2 aufgesetzt, so schließt der zusätzliche Hilfsmagnet 165 zunächst nur den Reed-Schalter 168, und hierdurch wird bei Betätigung des Netzschalters 90 der Thyristor 93 oder ein entsprechendes elektrisches Schaltelement gezündet, wodurch die Wicklung des Schaltrelais 74 kurzgeschlossen wird, so daß der Motor nicht eingeschaltet werden kann. Wird dagegen auch noch der Deckel 1 ordnungsgemäß positioniert, so daß der Hauptmagnet 31' auch den Reed-Schalter 10 schließt, so kann es nicht zum Zünden des Thyristors 93 kommen, und bei Betätigung des Netzschalters 90 zieht das Schaltrelais 74 an und schaltet den Motor ein. Werden nun bei laufendem Motor die Geräteteile voneinander gelöst, so öffnen sich die Reed-Schalter 10 und/oder 168, wodurch der Thyristor 93 in jedem Fall momentan zum Zünden gebracht wird. Hierdurch wird die Wicklung des Schaltrelais 74 wiederum kurzgeschlossen, das Schaltrelais 74 fällt ab, und der Motor wird ausgeschaltet. Ein zusätzlicher Vorteil der Schaltung gemäß Figur 8 besteht darin, daß aufgrund des Funktionsprinzips des Thyristors 93 der Motor nicht durch Arretieren der Geräteteile 1, 2, 3 wieder in Gang gesetzt werden kann, wenn der Thyristor einmal gezündet hat, sondern daß zum Wiedereinschalten des Motors in diesem Fall unbedingt zunächst der Netzschalter ausgeschaltet und damit der Thyristor 93 zum Verlöschen gebracht werden muß.

In jedem der beschriebenen Ausführungsbeispiele der vorliegenden Erfindung wird eine bleibende Magnetisierung der den magnetischen Kraftfluß der Hauptmagnete übertragenden Bauelemente durch die bei jedem Lösen und wieder Zusammensetzen der Geräteteile zwangsläufig erfolgende Endmagnetisierung durch die er-findungsgemäßen Nebenmagnete wirksam elimi-niert. Die hierdurch erzielte Unfall- und Betriebssicherheit der erfindungsgemäßen Geräte kann noch dadurch gesteigert werden, daß die magnetisch beeinflußbaren Schalter — also im allgemeinen die Reed-Schalter — im Sockel so federnd und/oder gelenkig gelagert sind, daß sie bei jedem Zusammensetzen des Gesamtgerätes in den selben definierten Abstand zu dem Spalt zwischen den unteren Enden der Magnetleiter gelangen. In einer weiteren vorteilhaften Ausführungsform werden Fehlschaltungen zusätzlich dadurch verhindert, daß die magnetisch betä-tigbaren Schalter mittels geeigneter Ab-schirmungen so gegen magnetische Störfelder abgekapselt sind, daß sie nur vom magnetischen Kraftfluß des Haupt- und Nebenmagneten bzw. des Hilfsmagneten beeinflußt werden.

**Patentansprüche**

1. Mehrteiliges, mit einer magnetischen Sicherheitseinrichtung ausgestattetes, elektromotorisch betriebenes Gerät mit einem den elektrischen Antriebsmotor sowie einen diesen steuernden, durch Magnetfelder betätigbaren Schalter (10) enthaltenden ersten Geräteteil (2), einem mindestens einen als Permanentmagnet ausgebildeten Hauptmagneten enthaltenden zweiten Geräteteil (1) sowie einem mindestens einen Magnetleiter enthaltenden dritten Geräteteil 3, wobei erst in ordnungsgemäßer Schließstellung des zusammengesetzten Gesamtgerätes die von dem Hauptmagneten ausgehenden Kraftlinien in die Nähe des Magnetleiters gelangen und nur in dieser Stellung der auf den Magnetleiter übergehende und von ihm übertragene magnetische Kraftfluß ausreicht, eine Betätigung des in der Nähe am anderen Ende des Magnetleiters ausgebildeten Schalters (10) auszulösen, dadurch gekennzeichnet, daß auf dem zweiten Geräteteil (1) neben dem Hauptmagneten ein Nebenmagnet als Permanentmagnet ausgebildet ist, daß der magnetische Kraftfluß des Nebenmagneten demjenigen des Hauptmagneten engegengerichtet ist, daß beim Lösen oder Zusammensetzen dieser Geräteteile (1, 3) die von dem Neben-magneten ausgehenden Kraftlinien in unmittelba-re Nähe zum Magnetleiter gelangen und daß die von dem Nebenmagneten in den Magnetleiter eintretende und zu dem magnetisch betätigbaren Schalter (10) geleitende Kraftflußdichte geringer ist als diejenige des Hauptmagneten.

2. Gerät nach Anspruch 1, dadurch gekennzeichnet, daß die Geräteteile (1, 2, 3) in axialer Richtung und/oder durch relative Drehung zusammenfügbar und miteinander verrastbar sind.

3. Gerät nach Anspruch 1 oder 2, dadurch gekennzeichnet, daß am oder im dritten Geräteteil (3) zwei Magnetleiter (15, 16 ; 65, 66 ; 65', 66') so angeordnet und dem Nord- und Südpol des Hauptmagneten zugeordnet sind, daß sie bei ordnungsgemäß zusammengesetztem Gesamtgerät den magnetischen Kraftfluß des Hauptmagneten in einem in sich geschlossenen, den magnetisch betätigbaren Schalter (10) erfassenden Kraftflußkreis führen.

4. Gerät nach Anspruch 3, dadurch gekennzeichnet, daß der Hauptmagnet und/oder der Nebenmagnet aus einem, vorzugsweise durch ein Joch verbundenen, diametral am Umfang des zweiten Geräteteils (1) angeordneten Hauptmagnet-Paar (20, 21) bzw. Nebenmagnet-Paar (19, 22) mit einem dem Hauptmagnet-Paar zugeordneten, am Umfang des dritten Geräteteils (3) angeordneten Magnetleiter-Paar (15, 16) besteht, wobei die den Magneten abgewandten Enden (13, 14) des Magnetleiter-Paares bis auf einen schmalen Spalt zusammengeführt sind, der bei ordnungsgemäß zusammengesetztem Gesamtgerät dem magnetisch betätigbaren Schalter (10) unmittelbar benachbart ist.

5. Gerät nach Anspruch 4, dadurch gekennzeichnet, daß die beiden Magnetleiter (15, 16) mit sich im wesentlichen stetig verringerndem Abstand von dem Hauptmagnet-Paar (20, 21) zu dem magnetisch betätigbaren Schalter (10) verlaufen.

6. Gerät nach einem der Ansprüche 1 bis 3, dadurch gekennzeichnet, daß Hauptmagnet (31, 31') und Nebenmagnet (32, 32') am Umfang oder im Rand des zweiten Geräteteils (1) angeordnet sind, während der eine Magnetleiter (66 bzw. 66') an oder in der Außenwand des dritten Geräteteils (3) und der andere Magnetleiter (65 bzw. 65') an oder in einem dem dritten Geräteteil (3) angeformten Griff (67) verläuft.

7. Gerät nach einem der Ansprüche 1 bis 6, dadurch gekennzeichnet, daß sein erstes Geräteteil (2) sowohl mit den die Magnetleiter enthaltenden und den zugehörigen die Haupt- und Nebenmagnete enthaltenden Geräteteilen (3, 1), als auch mit ungefährlichen Geräteteilen koppelbar und betreibbar ist, die keine magnetischen Sicherungseinrichtungen enthalten.

8. Gerät nach Anspruch 7, dadurch gekennzeichnet, daß dritte Geräteteile (3) einen Hilfsmagneten (165) enthalten, der bei ordnungsgemäßer Kopplung der Geräteteile (2 und 3) einen zusätzlichen, im Motorteil (2) angeordneten, magnetisch betätigbaren Schalter (168) schließt.

9. Gerät nach Anspruch 8, dadurch gekennzeichnet, daß sein Motor mittels eines durch einen Netzschalter (90) über einen Gleichrichter (91) anschaltbaren Hauptrelais (74) ein- und ausschaltbar ist, zu dessen Wicklung ein Thyristor (93) oder ein entsprechendes elektronisches Schaltelement parallelgeschaltet ist, wobei zur Anode/Gitter-Strecke des Thyristors der magnetisch betätigbare Schalter (168) in Reihe mit einem Widerstand parallelgeschaltet ist, und zur Gitter/Kathode-Strecke der magnetisch betätigbare Schalter (10) parallel liegt.

10. Gerät nach einem der Ansprüche 1 bis 9, dadurch gekennzeichnet, daß es eine elektrische Küchenmaschine ist, die als erstes Geräteteil (2) einen den Antriebsmotor enthaltenden Sockel, als drittes Geräteteil (3) einen Arbeitsbehälter mit rotierend antreibbaren Werkzeugen, sowie als zweites Geräteteil (1) einen Deckel für diese Arbeitsbehälter aufweist.

## Claims

1. Multi-part apparatus which is operated by an electric motor and equipped with a magnetic safety device, having a first part (2) of the apparatus containing the electric drive motor and a switch (10) which controls this and can be actuated by magnetic fields, a second part (1) of the apparatus containing at least one main magnet constructed in the form of a permanent magnet, as well as a third part (3) of the apparatus containing at least one magnetic conductor wherein the lines of force originating from the main magnet only reach the vicinity of the magnetic conductor when the whole assembled apparatus is in the correct closed position and only in this position is the magnetic flux which is transferred to the magnetic conductor and transmitted by it sufficient to initiate actuation of the switch (10) constructed close by on the other end of the magnetic conductor, characterised in that, apart from the main magnet, a subsidiary magnet is constructed in the form of a permanent magnet on the second part (1) of the apparatus, that the magnetic flux of the subsidiary magnet is oppositely directed to that of the main magnet, that during the disconnection or assembly of these parts (1, 3) of the apparatus, the lines of force originating from the subsidiary magnet reach the immediate vicinity of the magnetic conductor and that the magnetic flux density entering the magnetic conductor from the subsidiary magnet and conducted to the magnetically actuable switch (10) is lower than that of the main magnet.

2. Apparatus according to claim 1, characterised in that the parts (1, 2, 3) of the apparatus can be joined together and locked together in the axial direction and/or by relative rotation.

3. Apparatus according to claim 1 or 2, characterised in that two magnetic conductors (15, 16 ; 65, 66 ; 65', 66') are arranged on or in the third part (3) of the apparatus and associated with the north and south pole of the main magnet so that, when the whole apparatus is correctly assembled, they convey the magnetic flux of the main magnet in a closed flux circuit comprising the switch (10) which can be actuated magnetically.

4. Apparatus according to claim 3, characterised in that the main magnet and/or the subsidiary magnet consists of a pair of main magnets (20, 21) or pair of subsidiary magnets (19, 22) preferably connected by a yoke and arranged diametrically at the circumference of the second part (1) of the apparatus, with a pair of magnetic conductors (15, 16) associated with the pair of main magnets and disposed at the circumference of the third part (3) of the apparatus, the ends (13, 14) of the pair of magnetic conductors remote from the magnets being brought together apart from a narrow gap which, when the whole apparatus is correctly assembled, is immediately adjacent to the switch (10) which can be actuated magnetically.

5. Apparatus according to claim 4, characterised in that the two magnetic conductors (15, 16) extend from the pair of main magnets (20, 21) to the switch (10) which can be actuated magnetically, with spacing which is reduced substantially continuously.

6. Apparatus according to one of the claims 1 to 3, characterised in that the main magnet (31, 31') and subsidiary magnet (32, 32') are disposed at the circumference of or in the edge of the second part (1) of the apparatus while the one magnetic conductor (66 or 66') extends on or in the outer wall of the third part (3) of the apparatus and the other magnetic conductor (65 or 65') extends on or in a handle (67) formed on the third part (3) of the apparatus.

7. Apparatus according to one of the claims 1 to 6, characterised in that the first part (2) of the apparatus can be coupled to and operated by not only parts (3, 1) of the apparatus containing the magnetic conductors and the associated parts (3, 1) of the apparatus containing the main and subsidiary magnets but also parts of the apparatus which are not dangerous and which do not contain any magnetic safety devices.

8. Apparatus according to claim 7, characterised in that third parts (3) of the apparatus contain an auxiliary magnet (165) which, in the event of correct coupling of the parts (2 and 3) of the apparatus, closes an additional magnetically operated switch (168) disposed in the motor part (2).

9. Apparatus according to claim 8, characterised in that its motor can be switched on and off by means of a main relay (74) which can be connected in by a mains switch (90) through a rectifier (91) and connected in parallel with the winding of which there is a thyristor (93) or a corresponding electronic switching element, the magnetically operated switch (168) being connected, in series with a resistor, in parallel with the anode/grid path of the thyristor and the magnetically operated switch (10) being connected in parallel with the grid/cathode path.

10. Apparatus according to one of the claims 1 to 9, characterised in that it is an electric kitchen machine which comprises a base containing the drive motor as the first part (2) of the apparatus, a working container with tools which can be driven in rotation as the third part (3) of the apparatus and a cover for this working container as the second part (1) of the apparatus.

**Revendications**

1. Appareil à moteur électrique, réalisé en plusieurs parties et équipé d'un dispositif de sécurité magnétique, avec un moteur d'entraînement électrique, une première partie (2) comportant un interrupteur (10) actionné par des champs magnétiques et commandant ledit moteur, une deuxième partie comportant au moins un aimant principal réalisé sous forme d'un aimant permanent, et une troisième partie comportant au moins un conducteur magnétique, les lignes de force qui partent de l'aimant permanent n'arrivant à proximité du conducteur magnétique que dans la position correspondante de fermeture de l'appareil assemblé et le flux magnétique qui pénètre dans le conducteur magnétique puis est transmis par ce dernier n'actionnant que dans cette position l'interrupteur (10) réalisé à proximité de l'autre extrémité du conducteur magnétique, ledit appareil étant caractérisé en ce qu'un aimant secondaire est réalisé sous forme d'aimant permanent sur la deuxième partie (1) de l'appareil, à côté de l'aimant principal ; le flux magnétique de l'aimant secondaire est opposé à celui de l'aimant principal ; lors du démontage ou de l'assemblage de ces parties (1, 3) de l'appareil, les lignes de force partant de l'aimant secondaire arrivent à proximité immédiate du conducteur magnétique ; et l'induction magnétique produite par l'aimant secondaire dans le conducteur magnétique et transmise à l'interrupteur (10) actionné magnétiquement est inférieure à celle de l'aimant principal.

2. Appareil selon revendication 1, caractérisé en ce que les parties (1, 2, 3) sont assemblées et encliquetées l'une sur l'autre axialement et/ou par une rotation relative.

3. Appareil selon une des revendications 1 ou 2, caractérisé en ce que deux conducteurs magnétiques (15, 16 ; 65, 66 ; 65', 66') sont disposés sur ou dans la troisième partie (3) de l'appareil et affectés aux pôles nord et sud de l'aimant principal de façon, quand l'appareil complet est correctement assemblé, à diriger le flux magnétique de l'aimant principal dans un circuit fermé, comprenant l'interrupteur (10) actionné magnétiquement.

4. Appareil selon revendication 3, caractérisé en ce que l'aimant principal et/ou l'aimant secondaire sont constitués par un seul aimant et de préférence par une paire d'aimants principaux (20, 21) ou d'aimants secondaires (19, 22), reliés par une culasse et disposés diamétralement sur la circonférence de la seconde partie (1), avec une paire de conducteurs magnétiques (15, 16) disposés sur la troisième partie (3) de l'appareil et affectés à la paire d'aimants principaux, les extrémités (13, 14) de la paire de conducteurs magnétiques opposées aux aimants se rapprochant en formant un entrefer étroit qui, dans l'appareil complet correctement assemblé, se trouve à proximité immédiate de l'interrupteur (10) actionné magnétiquement.

5. Appareil selon revendication 4, caractérisé en ce que les deux conducteurs magnétiques (15, 16) sont disposés avec un écartement à décroissance sensiblement continue entre la paire d'aimants permanents (20, 21) et l'interrupteur (10) actionné magnétiquement.

6. Appareil selon une quelconque des revendications 1 à 3, caractérisé en ce que l'aimant principal (31, 31') et l'aimant secondaire (32, 32') sont disposés sur la circonférence ou le bord de la deuxième partie (1) de l'appareil, tandis qu'un conducteur magnétique (66 ou 66') est disposé sur ou dans la paroi extérieure de la troisième partie (3) de l'appareil et le second conducteur magnétique (65 ou 65') est disposé sur ou dans une poignée (67) formée sur la troisième partie (3).

7. Appareil selon une quelconque des revendications 1 à 6, caractérisé en ce que la première partie (2) peut être accouplée et utilisée aussi bien avec les parties (3, 1) comportant les conducteurs magnétiques et les aimants principaux et secondaires correspondants qu'avec les parties non dangereuses ne comportant aucun dispositif de sécurité magnétique.

8. Appareil selon revendication 7, caractérisé en ce que les troisièmes parties (3) comportent un aimant auxiliaire (165) qui, en cas d'accouplement correct des parties (2 et 3) de l'appareil, ferme un interrupteur supplémentaire (168) actionné magnétiquement et logé dans le bloc moteur (2).

9. Appareil selon revendication 8, caractérisé en ce que son moteur est branché et coupé par un interrupteur secteur (90) via un relais principal (74) connecté par un redresseur (91) et dont l'enroulement est en parallèle avec un thyristor (93) ou un autre élément de commutation électronique approprié, le circuit anode-grille du thyristor étant en parallèle avec le branchement en série de l'interrupteur (168) actionné magnétiquement et d'une résistance, et le circuit grille-cathode étant en parallèle avec l'interrupteur (10) actionné magnétiquement.

10. Appareil selon une quelconque des revendications 1 à 9, caractérisé en ce qu'il s'agit d'un petit appareil électroménager, dont la première partie (2) est un socle contenant le moteur d'entraînement, la troisième partie (3) est un bol avec des outils entraînés en rotation et la deuxième partie (1) un couvercle dudit bol.

FIG. 1

## FIG. 2

# FIG. 3

a)

b)

c)

d)

e)

FIG.4

**FIG. 5a**

0 120 496

**FIG. 5b**

## FIG. 6a

## FIG. 6b

# FIG.7

FIG. 8